# EUROPEAN PATENT APPLICATION

(11) **EP 4 527 721 A1**
(43) Date of publication of application: **26.03.2025**
(21) Application number: 23874483.3
(22) Date of filing: 29.06.2023
(51) Int. Cl.: B62D 25/20

(54) **SHOCK ABSORPTION STRUCTURE FOR VEHICLE**

(30) Priority: 07.10.2022 JP 2022162544
(71) Applicant: Toyoda Iron Works Co., Ltd., Toyota-shi, Aichi 471-8507 (JP)
(72) Inventor: TOCHIGI Yusuke, Toyota-shi, Aichi 471-8507 (JP)
(74) Representative: Zimmermann, Tankred Klaus
(86) International application number: PCT/JP2023/024159
(87) International publication number: WO 2024/075349

(57) **Abstract**

In a vehicle impact absorbing structure, an impact absorbing member (22) is disposed in a side sill formed in a hollow shape in a vehicle front-and-rear direction, as a configuration that absorbs energy during a collision on the side of a vehicle. The impact absorbing member (22) is formed and disposed in a corrugated shape in the vehicle front-and-rear direction. The corrugated-plate shape is provided, between ridge lines (24a) and (24b) and between ridge lines (24c) and (24d), the ridge lines (24a), (24b), (24c), and (24d) being arranged in the vehicle front-and-rear direction, with a reinforcing shape (a first bead (36)) that prevents or suppresses falling deformation of the ridge lines (24a), (24b), (24c), and (24d) in the vehicle front-and-rear direction.

## Description

### TECHNICAL FIELD

The present invention relates to a vehicle impact absorbing structure. Specifically, the present invention relates to a vehicle impact absorbing structure for effectively absorbing impact load during a collision on the side of a vehicle (a side collision).

### BACKGROUND ART

A vehicle, particularly an electric automobile, has a configuration where a battery is stored under a floor of the vehicle. In addition, such a vehicle is provided with an impact absorbing structure for protecting the battery from an impact during a collision of the vehicle. In particular, it is important for the impact absorbing structure to be an impact absorbing structure against a collision from the side of the vehicle, since the battery is placed under the floor of the central portion of the vehicle.

The impact absorbing structure against a collision from the side of the vehicle is usually placed in a side sill (also referred to as a "rocker") which is a vehicle skeletal member disposed between the floor under which the battery is placed and a side door of the automobile. The side sill is a hollow member extending in a front-and-rear direction of the vehicle, and an impact absorbing member is disposed inside the side sill to absorb energy during a side collision.

For example, an impact absorbing member disposed in a side sill, which is disclosed in JP-A-2021-146973, is formed and disposed in an elongated shape in a vehicle front-and-rear direction. Specifically, the elongated shape has a form in which a member that has a corrugated-plate shape as viewed in cross section in the vehicle front-and-rear direction is extended and disposed. This corrugated-plate shape reinforces the strength against the impact load acting from a vehicle width direction to strongly absorb the energy due to the deformation of the impact absorbing member.

Note that an evaluation test for energy absorption in an impact absorbing structure against a collision from the side of a vehicle is generally carried out by causing a side surface portion of a vehicle such as an automobile and a cylindrical pole set upright next to the side surface portion to collide with each other. This is usually referred to as a "side impact pole test." It is necessary to receive a predetermined rating in this side impact pole test.

### SUMMARY OF INVENTION

### PROBLEMS TO BE SOLVED BY INVENTION

In a corrugated-plate-shaped impact absorbing member such as described above, a direction of ridge lines forming a corrugated-plate shape is set in a vehicle width direction. Consequently, during a collision on the side of a vehicle, particularly during a side collision with a pole, side impact load on the ridge lines formed in the vehicle width direction of the impact absorbing member is inputted obliquely. Hence, the ridge lines may fall due to the input of the side impact load, and the energy absorption due to axial crush deformation of the corrugated-plate shape may be insufficient.

Hence, it is desired to ensure that energy is absorbed during a side collision.

### SOLUTION TO PROBLEMS

One aspect is a vehicle impact absorbing structure where an impact absorbing member that absorbs energy during a collision on the side of a vehicle is disposed in a side sill formed in a hollow shape in a vehicle front-and-rear direction, in which the impact absorbing member is disposed in a corrugated-plate shape in the vehicle front-and-rear direction, and is provided, between ridge lines of the corrugated-plate shape, the ridge lines being arranged in the vehicle front-and-rear direction, with a reinforcing shape that prevents or suppresses falling deformation of the ridge lines in the vehicle front-and-rear direction.

In some embodiments of the vehicle impact absorbing structure, the reinforcing shape is a bead shape.

In some embodiments of the vehicle impact absorbing structure, the bead shape is a recessed shape downward from a corrugated-plate-shape-forming surface.

In some embodiments of the vehicle impact absorbing structure, the bead shape is a protruding shape upward from a corrugated-plate-shape-forming surface.

In some embodiments of the vehicle impact absorbing structure, the protruding shape is continuously formed in the vehicle front-and-rear direction on a corrugated-plate surface of the corrugated-plate shape.

In some embodiments of the vehicle impact absorbing structure, the recessed shape is continuously formed in the vehicle front-and-rear direction on a corrugated-plate surface of the corrugated-plate shape.

### EFFECTS OF INVENTION

In some embodiments, strength between ridge lines of a corrugated-plate shape of an impact absorbing member is reinforced to prevent or suppress falling deformation of the ridge lines of the corrugated plate in a vehicle width direction and to ensure energy absorption during a side collision.

### BRIEF DESCRIPTION OF DRAWINGS

Fig. 1 is a schematic cross-sectional view of a vehicle impact absorbing structure of one embodiment, and illustrates a state where a pole for a side impact pole test is placed next to a vehicle.
Fig. 2 is an exploded perspective view of a hollow side sill that includes two side sill members having a hat-shaped cross section and in which an impact absorbing member is disposed.
Fig. 3 is a perspective view illustrating a corrugated-plate-shaped impact absorbing member as the one embodiment.
Fig. 4 is a perspective view illustrating a corrugated-plate-shaped impact absorbing member as another embodiment.
Fig. 5 is a perspective view illustrating a corrugated-plate-shaped impact absorbing member as still another embodiment.
Fig. 6 is a perspective view illustrating a corrugated-plate-shaped impact absorbing member as yet another embodiment.
Fig. 7 is a vertical cross-sectional view illustrating the corrugated-plate shape of the impact absorbing member in a diagram to explain an impact absorbing action according to the one embodiment.
Fig. 8 illustrates the impact absorbing member of Fig. 7 in plan view and is a diagram illustrating a state after a collision with a pole.
Fig. 9 is a plan view illustrating a deformed state of ridge lines of the corrugated-plate shape of the impact absorbing member according to the one embodiment in a side impact pole test.
Fig. 10 is a plan view illustrating a deformed state of ridge lines of an impact absorbing member according to a known structure in a side impact pole test.

### DESCRIPTION OF EMBODIMENTS

Various embodiments are described hereinafter with reference to the drawings. In the following description, similar reference numerals are assigned to corresponding or similar features to avoid overlapping descriptions.

### [Impact Absorbing Structure]

One embodiment is a structure that absorbs an impact during a side collision to protect a battery of an electric automobile. Note that UPR in the indications of directions in the description of the drawings indicates upward, OUT indicates outward as viewed from the interior of an automobile, and FR indicates forward in the automobile. Therefore, the direction denoted by UPR is a vehicle up-and-down direction, the direction denoted by OUT is a vehicle width direction, and the direction denoted by FR is a vehicle front-and-rear direction.

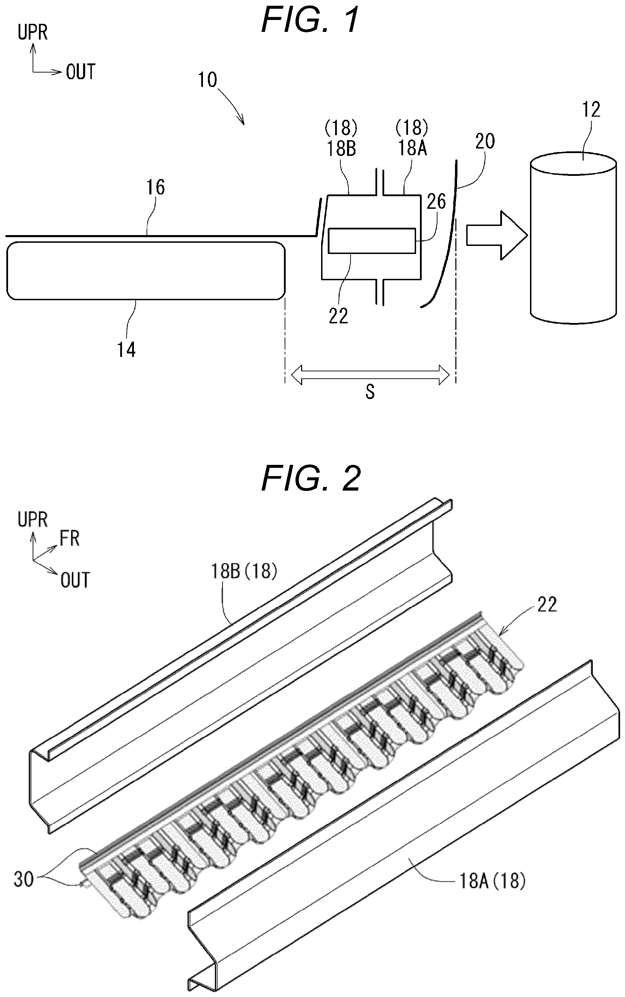

Fig. 1 schematically illustrates an impact absorbing structure 10 in cross section, in which a pole 12 for a side impact pole test is placed next to the body of the automobile. A battery 14, which is a power source of the electric automobile, is placed under a floor 16 of the electric automobile. As viewed in Fig. 1, a side sill 18 forming the skeleton of the body of the automobile is disposed on a right side portion of the floor 16, and furthermore, a side door 20 (usually a front door) is placed to the right of the side sill 18. Furthermore, the pole 12 is placed to the right of the side door 20 in the side impact pole test. It is configured in such a manner that when the side door 20 collides with the pole 12, the impact absorbing structure 10 absorbs the collision's energy within an area S between the side door 20 and the battery 14 to protect the battery 14. It is configured in such a manner that the energy is absorbed in the side sill 18 in particular.

### [Impact Absorbing Member]

As the one embodiment, an impact absorbing member 22 is disposed in the side sill 18 to enable the impact absorbing member 22 to strongly absorb a side collision impact at the position of the side sill 18. As viewed in Fig. 1, the side sill 18 is formed by a combination of an outer side sill member 18A placed on the right side and an inner side sill member 18B placed on the left side, both members 18A and 18B having what is called a hat shape in cross section. As a result, the side sill members are formed in a hollow shape, and the hollow shape extends in the vehicle front-and-rear direction. Note that the material of the impact absorbing member 22 can be any steel material suitable for energy absorption based on deformation due to axial crush.

Fig. 2 illustrates the disposed form of the impact absorbing member 22 that is disposed in the side sill 18, with the disassembled outer and inner side sill members 18A and 18B. The impact absorbing member 22 is formed in a corrugated-plate shape as viewed in cross section in the vehicle front-and-rear direction, and is disposed in such a manner that a longitudinal direction thereof is oriented in the vehicle front-and-rear direction. The impact absorbing member 22 absorbs energy while being crushed in the vehicle width direction due to an impact from the vehicle width direction during a side collision. At this time in point, since the impact absorbing member 22 is formed in a corrugated-plate shape to encourage an improvement in strength, a large amount of energy can be absorbed. The corrugated-plate shape of the impact absorbing member 22 is formed by alternating vertical walls 32 extending in the vehicle up-and-down direction and flat walls 34 (upper surfaces 34U and lower surfaces 34L) extending in the vehicle front-and-rear direction.

Note that the impact absorbing member 22 can be formed by connecting a plurality of members having a corrugated-plate portion along the longitudinal direction (the vehicle front-and-rear direction). The impact absorbing member 22 may be formed by one sheet if possible. As illustrated in Fig. 2, the impact absorbing member 22 is positioned at an inner end thereof and fixed to the inner side sill member 18B by mounting members 30 disposed on an upper and a lower surface of the impact absorbing member 22.

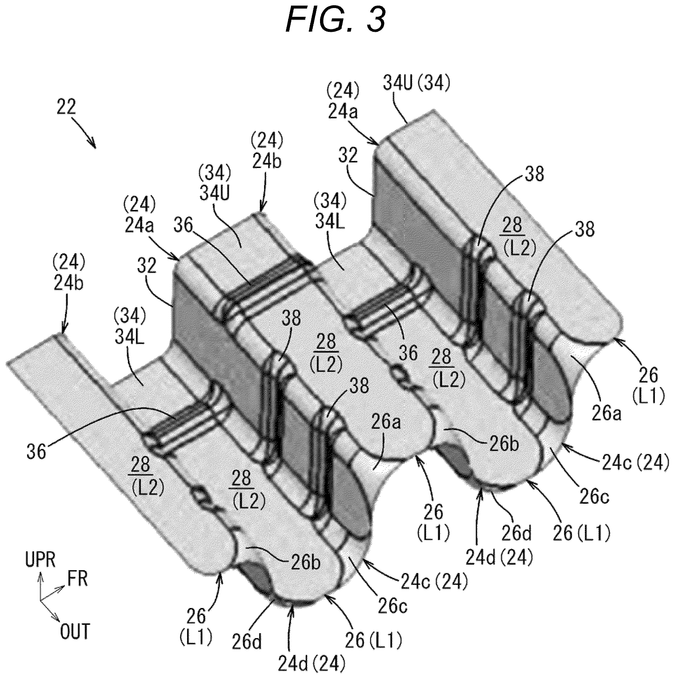

In the one embodiment, since the impact absorbing member 22 is formed in a corrugated-plate shape along the vehicle front-and-rear direction as illustrated in Fig. 3, ridge lines 24 extending in the vehicle width direction are formed. Specifically, one cycle of the waves includes two ridge lines 24a and 24b on the upper surface 34U of the corrugated-plate shape, and two ridge lines 24c and 24d on the lower surface 34L of the corrugated-plate shape. Note that an edge portion 26 of the ridge lines 24 of the embodiment is formed in such a manner that bent portions of the corrugated-plate shape have a rounded shape and therefore is formed with a predetermined rounding-off width.

### [Beads]

As illustrated in Fig. 3, the impact absorbing member 22 is formed by connecting the vertical walls 32 arranged in the vehicle up-and-down direction and the flat walls 34 arranged in the vehicle front-and-rear direction. First beads 36 are formed on the flat walls 34. The first beads 36 are formed on the upper surfaces 34U and the lower surfaces 34L of the flat walls 34. The first beads 36 formed on the upper surfaces 34U are formed all the way in the vehicle front-and-rear direction, each between the ridge line 24a and the ridge line 24b. The first beads 36 formed on the lower surfaces 34L are formed all the way in the vehicle front-and-rear direction, each between the ridge line 24c and the ridge line 24d.

As illustrated in Fig. 3, the first beads 36 are formed inward of a central portion of the corrugated-plate shape in a width direction thereof and are formed at one place on each of the upper surfaces 34U and the lower surfaces 34L of the flat walls 34. Note that the first beads 36 formed on the upper surfaces 34U and the first beads 36 formed on the lower surfaces 34L are at the same position in the width direction. In addition, the first beads 36 have a protruding shape. The first beads 36 have a reinforcing shape that prevents or suppresses falling deformation of the ridge lines 24a, 24b, 24c, and 24d of the corrugated-plate shape in the vehicle front-and-rear direction.

Moreover, as illustrated in Fig. 3, in the embodiment, second beads 38 are formed on the vertical walls 32 arranged in the vehicle up-and-down direction. Specifically, the second beads 38 are provided on the vertical walls 32, each between the ridge line 24a and the ridge line 24c. In the embodiment illustrated in Fig. 3, two second beads 38 are provided, and the two beads are provided at equal intervals from the edge portion 26 on the outer end of the corrugated-plate shape to the central portion position. In addition, the second beads 38 have a recessed shape.

Furthermore, in the embodiment, the edge portion 26 to which impact load is applied during a side collision is formed with curved surfaces 26a, 26b, 26c, and 26d in which the shapes of end portions of the edge portions 26a, 26b, 26c, and 26d are rolled inward in places of the ridge lines 24a, 24b, 24c, and 24d, as illustrated in Fig. 3. As a result, the directions of the ridge lines 24 in the edge portion 26 are formed as directions inclined with respect to the vehicle width direction.

In the above embodiment, with the configuration of the above edge portion 26, the corrugated-plate shape of the impact absorbing member 22 is formed in such a manner that a lineal length L1 of the edge portion 26 of the corrugated-plate shape in an area of a predetermined length in the vehicle front-and-rear direction, for example, in one cycle of the corrugated-plate shape, is different from a lineal length L2 of a cross section of a portion other than the edge portion 26, for example, at a central portion position 28. In the embodiment, it is possible to form the corrugated-plate shape in such a manner that the lineal length L1 of the edge portion 26 of the corrugated-plate shape in the vehicle front-and-rear direction, and the lineal length L2 of the portion other than the edge portion 26, for example, at the central portion position 28, in the vehicle front-and-rear direction satisfy a relationship of L1 < L2.

### [Another Embodiment of Impact Absorbing Member 22]

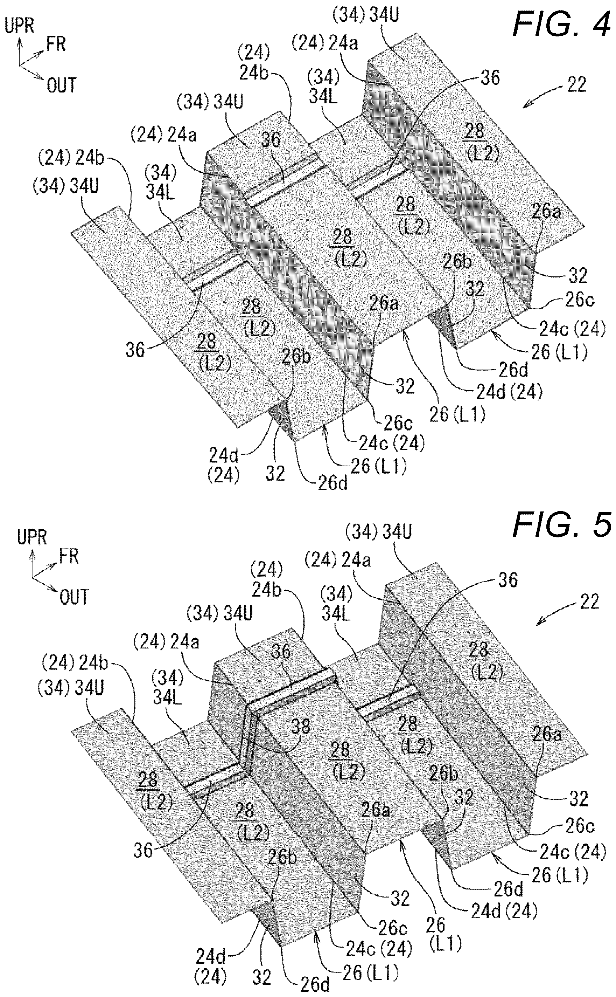

Another embodiment is described with reference to Fig. 4. In the another embodiment, the second beads 38 in the one embodiment are not formed. Moreover, the shapes of the end portions of the edge portions 26a, 26b, 26c, and 26d of the ridge lines 24a, 24b, 24c, and 24d in the one embodiment are not formed in a curved surface rolled inward.

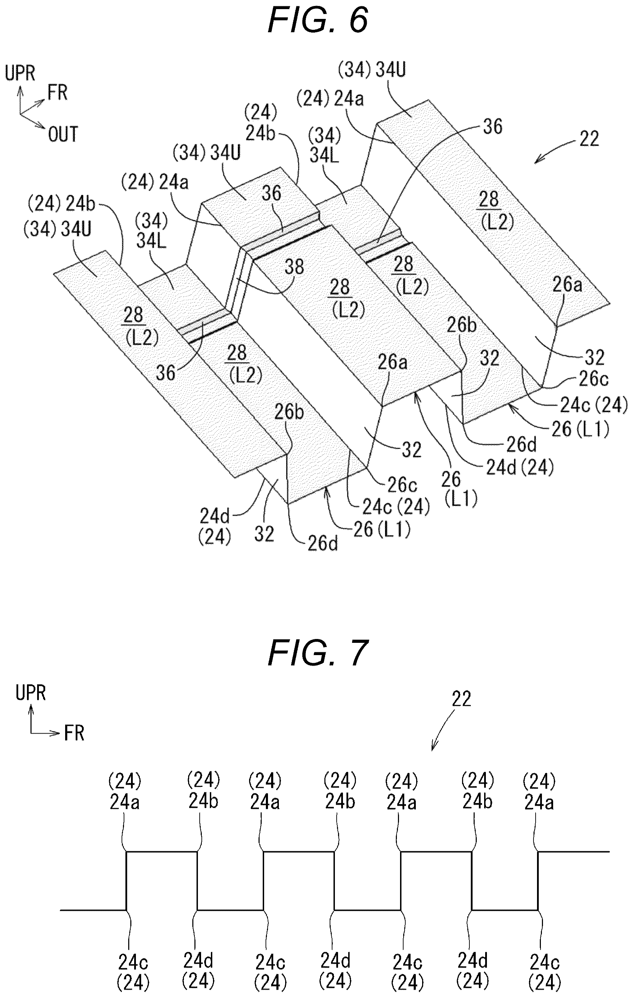

In addition, in the another embodiment illustrated in Fig. 4, the first beads 36 formed on the upper surfaces 34U and the lower surfaces 34L of the flat walls 34 are formed in a recessed shape. Note that in the embodiment of Fig. 4, the first beads 36 are formed on the flat walls 34 in an area that comes into contact with and collides with the pole 12 in a side impact pole test illustrated in Fig. 7 described below. However, the first beads 36 may be provided on all the flat walls 34.

### [Still Another Embodiment of Impact Absorbing Member 22]

Still another embodiment is described with reference to Fig. 5. In the still another embodiment, the shapes of the end portions of the edge portions 26a, 26b, 26c, and 26d of the ridge lines 24a, 24b, 24c, and 24d in the one embodiment are not formed in a curved surface rolled inward.

In addition, in the still another embodiment illustrated in Fig. 5, the first beads 36 formed on the upper surfaces 34U and the lower surfaces 34L of the flat walls 34 and the second beads 38 formed on the vertical walls 32 are formed as a bead that is continuous in the vehicle front-and-rear direction. Note that the bead shapes of the first beads 36 and the second beads 38 of the another embodiment illustrated in Fig. 5 are formed in a protruding shape. Therefore, the protruding shape is continuously formed in the vehicle front-and-rear direction. Note that in the another embodiment illustrated in Fig. 5, an area in which the first beads 36 and the second beads 38 are formed is a similar area to the case of the above-mentioned another embodiment, but the first beads 36 and the second beads 38 may be provided on all the flat walls 34 and vertical walls 32.

In the still another embodiment, the number of the second beads 38 formed on the vertical wall 32 is one, and the position of the second beads 38 is set at the same position as the position of the first beads 36. This position is the same as the position of the first beads 36 in the first embodiment illustrated in Fig. 3.

### [Still Another Embodiment of Impact Absorbing Member 22]

Yet another embodiment is described with reference to Fig. 6. In the embodiment of Fig. 6, the first beads 36 formed on the upper surfaces 34U and the lower surfaces 34L of the flat walls 34 and the second beads 38 formed on the vertical walls 32 are formed as a bead that is continuous in the vehicle front-and-rear direction. However, the difference lies only in the point that the bead shapes of the first beads 36 and the second beads 38 are formed in a protruding shape, and the other configurations are the same as those of the above-mentioned still another embodiment.

### [Effects of Above Embodiments]

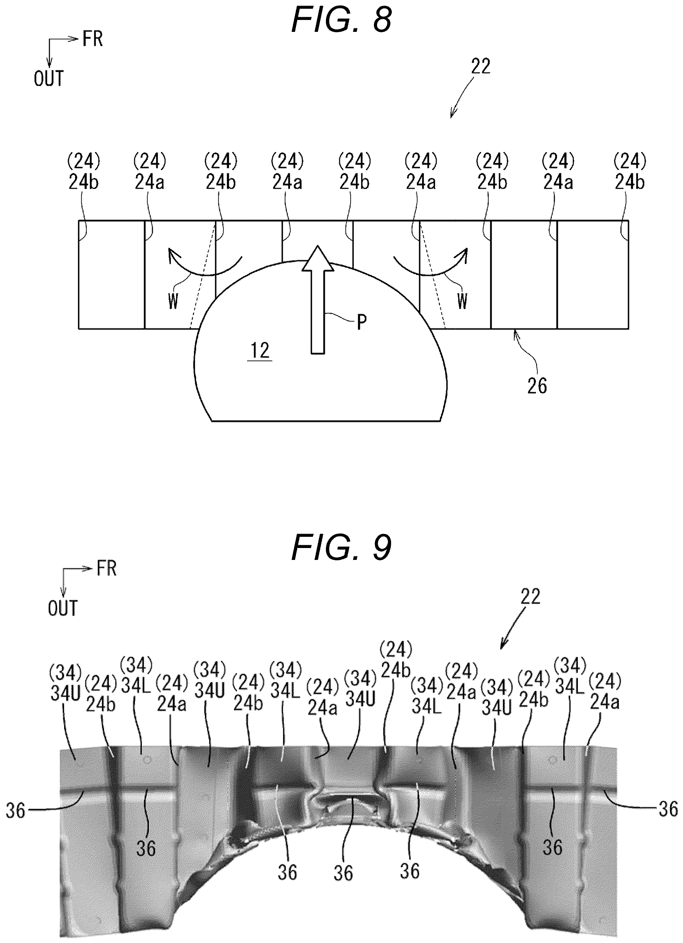

Fig. 7 is a vertical cross-sectional view illustrating the corrugated-plate shape of the impact absorbing member 22 in a diagram to explain an impact absorbing action during a side collision. Fig. 8 illustrates the impact absorbing member 22 in plan view and illustrates a state after a collision with the pole 12. As illustrated in Figs. 7 and 8, the ridge lines 24 of the corrugated-plate-shaped impact absorbing member 22 extend in the vehicle width direction. At the time of a collision on the side of the vehicle, as illustrated in Fig. 8, the pole 12 digs into the ridge lines 24 of the corrugated-plate shape from the edge portion 26 of the impact absorbing member 22 as indicated by an arrow P. Then, axial crush takes place in the corrugated-plate shape of the impact absorbing member 22 to absorb the energy.

In a corrugated-plate shape of a known impact absorbing member 22, the ridge lines 24 of the corrugated-plate shape illustrated in Fig. 8 are deformed as indicated by broken lines, so that energy absorption resulting from the axial crush of the impact absorbing member 22 takes place during the side collision. The reason is as follows: in a side impact pole test, the pole 12, which is a colliding object, is circular, and therefore a direction of action of side impact load on the ridge lines 24 of the impact absorbing member 22 is inputted obliquely. Hence, the ridge lines 24 are displaced as indicated by arrows W, and falling deformation takes place in the ridge lines 24. The falling deformation is indicated by the broken lines.

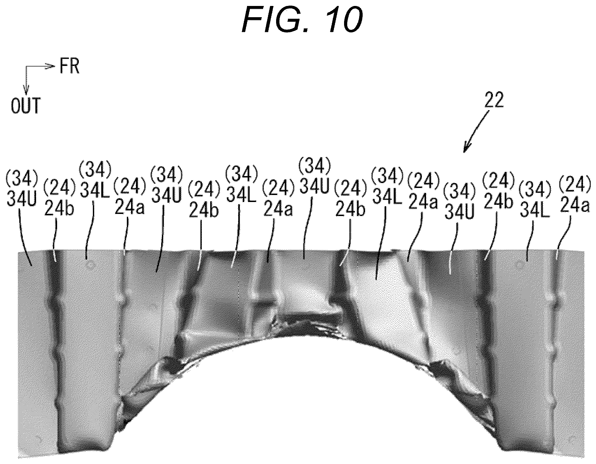

Fig. 10 illustrates a resultant state of the side impact pole test on the known impact absorbing member 22. As can be seen from the resultant state of the test, falling deformation takes place in the ridge lines 24 of the corrugated-plate shape of the known impact absorbing member 22. Therefore, the waveform of the corrugated-plate shape collapses due to an axial crush during the side collision, so that energy absorption takes place. Hence, the aim of enhancing energy absorption by forming the impact absorbing member 22 into a corrugated-plate shape is not sufficiently achieved.

**In** contrast, in the corrugated-plate shape of the impact absorbing member 22 of the one embodiment, the first beads 36 are formed on the flat walls 34. When the pole 12 enters during a side collision, the first beads 36 withstand a force by which the ridge lines 24 in the vehicle width direction are pushed in the vehicle front-and-rear direction, and therefore, the strength of the ridge lines 24 is reinforced. Consequently, also in axial crush during a side collision, the falling deformation of the ridge lines 24 in the vehicle width direction is prevented or suppressed. As a result, the waveform of the corrugated-plate shape is maintained, and the energy is absorbed.

Fig. 9 illustrates a resultant state of a side impact pole test on the impact absorbing member 22 of the above-mentioned embodiment in comparison with a case of the known technology illustrated in Fig. 10. As illustrated in Fig. 9, in the one embodiment, the first beads 36 formed on the flat walls 34 withstand the entry of the pole 12, which is the input of an impact during a side collision, in such a manner as to maintain the corrugated-plate shape, so that the corrugated-plate shape is reinforced. Consequently, the falling deformation of the ridge lines 24 in the vehicle front-and-rear direction is prevented or suppressed. As a result, the energy is absorbed while the corrugated-plate shape is maintained. Consequently, owing to the formation of the corrugated-plate shape, it is possible for the impact absorbing member 22 to sufficiently exhibit energy absorption.

Furthermore, according to the above-mentioned embodiments, there is also an effect that a reduction in the weight of the component and a reduction in the component cost can be encouraged as compared with a component that absorbs energy as in the vehicle impact absorbing structure 10.

Note that in the above-mentioned embodiments, energy is effectively absorbed also by forming the edge portion 26 of the ridge lines 24 of the impact absorbing member 22 with the curved surfaces rolled inward, and by the second beads 38 formed on the vertical walls 32. Details thereof are described below.

Firstly, an effect is described which is obtained by forming the edge portion 26 of the ridge lines 24 of the impact absorbing member 22 with the curved surfaces rolled inward. The edge portion 26 is formed with the curved surfaces rolled inward; therefore, the directions of the ridge lines 24 in the edge portion 26 are directions inclined with respect to the vehicle width direction. Conventionally, the ridge lines 24 of the corrugated-plate shape extend straight in the edge portion 26. **In** this case, impact load during a side collision is applied straight on to the edge portion 26, and a break may take place in the ridge line 24. When a break takes place in the ridge line 24, the vertical wall 32 and the flat wall 34 are independently deformed to absorb the energy. If the vertical wall 32 and the flat wall 34 are deformed separately, the corrugated-plate shape does not absorb the energy well.

In contrast, when it is configured in such a manner that the directions of the ridge lines 24 in the edge portion 26 are the directions inclined with respect to the vehicle width direction as in the above-mentioned embodiment, impact load during a side collision is not applied straight on to the edge portion 26. Consequently, a break in the ridge line 24 that would have conventionally taken place is prevented or suppressed, and axial crush due to the impact load causes deformation into a bellows shape to absorb the energy. As a result, the corrugated-plate shape absorbs the energy more excellently.

Next, an effect of the formation of the second beads 38 on the vertical walls 32 of the impact absorbing member 22 as illustrated in Fig. 3 is described. The position of the second bead 38 is set at a position where the bellows shape is formed due to the above-mentioned energy absorption, which can ensure that the bellows shape resulting from impact load during a side collision is formed. Consequently, the corrugated-plate shape absorbs the energy still more excellently. Note that two crests of the bellows shape may be formed in the energy absorption; therefore, the number of the second beads 38 formed, which are illustrated in Fig. 3, is two.

### [Other Embodiments]

The above-mentioned embodiments are about the case of the vehicle impact absorbing structure 10 for protecting a battery of an electric automobile during a side collision. However, an impact absorbing structure 10 for other than an electric automobile is also applicable as another embodiment.

Moreover, in the above-mentioned one embodiment, the edge portion 26 of the ridge lines 24 of the corrugated-plate shape of the impact absorbing member 22 is formed with the curved surfaces rolled inward. Such a configuration is not necessarily required. However, such a configuration can ensure that energy is absorbed more excellently.

Moreover, as the another embodiment, the second beads 38 are formed on the vertical walls 32 of the impact absorbing member 22 in the above-mentioned embodiment. Such a configuration is not necessarily required. However, such a configuration can ensure that energy is absorbed still more excellently.

### [Effects of Embodiments]

Furthermore, finally, the effects of the above-mentioned embodiments are additionally described.

In the above-mentioned embodiments, the corrugated-plate shape of the impact absorbing member is provided, between the ridge lines arranged in the vehicle front-and-rear direction, with the reinforcing shape that prevents or suppresses falling deformation of the ridge lines in the vehicle front-and-rear direction. Also when impact load acts on the corrugated-plate shape during a side collision, the reinforcing shape prevents or suppresses falling deformation of the ridge lines in the vehicle front-and-rear direction. As a result, the energy is appropriately absorbed due to axial crush deformation of the corrugated-plate shape, and the corrugated-plate shape of the impact absorbing member ensures that the energy is absorbed during the side collision.

In some embodiments, the reinforcing shape set on the corrugated-plate shape of the impact absorbing member is the bead shape. The bead shape reinforces the strength between the ridge lines of the corrugated-plate shape arranged in the vehicle front-and-rear direction. As a result, the corrugated-plate shape of the impact absorbing member ensures that energy is absorbed.

In some embodiments, the bead shape of the reinforcing shape is a recessed shape recessed downward from the corrugated-plate-shape-forming surface. The recessed shape ensures that the strength between the ridge lines of the corrugated-plate shape is reinforced. As a result, the corrugated-plate shape of the impact absorbing member ensures that energy is absorbed.

In some embodiments, the bead shape of the reinforcing shape is a protruding shape protruding upward from the corrugated-plate-shape-forming surface. The protruding shape ensures that the strength between the ridge lines of the corrugated-plate shape is reinforced. As a result, the corrugated-plate shape of the impact absorbing member ensures that energy is absorbed.

In some embodiments, the bead shape of the reinforcing shape is a protruding shape protruding upward, or a recessed shape recessed downward, from the corrugated-plate-shape-forming surface, and the protruding or recessed shape is continuously formed in the vehicle front-and-rear direction on or in the corrugated-plate surface of the corrugated-plate shape. It ensures that the strength between the ridge lines of the corrugated-plate shape is reinforced. As a result, the corrugated-plate shape of the impact absorbing member ensures that energy is absorbed.

Up to this point various embodiments have been described. However, the present technology is not limited to these embodiments, and those skilled in the art can make various additions, deletions, modifications, and improvements.

## Claims

1. A vehicle impact absorbing structure that absorbs energy during a collision on the side of a vehicle, the vehicle impact absorbing structure comprising:
a side sill formed in a hollow shape in a vehicle front-and-rear direction; and
an impact absorbing member disposed in the side sill, wherein
the impact absorbing member is formed in a corrugated-plate shape in the vehicle front-and-rear direction, and is provided, between ridge lines of the corrugated-plate shape, the ridge lines being arranged in the vehicle front-and-rear direction, with a reinforcing shape that prevents or suppresses falling deformation of the ridge lines in the vehicle front-and-rear direction.

2. The vehicle impact absorbing structure according to claim 1, wherein the reinforcing shape is a bead shape.

3. The vehicle impact absorbing structure according to claim 2, wherein the bead shape is a recessed shape recessed downward from a corrugated-plate-shape-forming surface.

4. The vehicle impact absorbing structure according to claim 2, wherein the bead shape is a protruding shape protruding upward from a corrugated-plate-shape-forming surface.

5. The vehicle impact absorbing structure according to claim 4, wherein the protruding shape is continuously formed in the vehicle front-and-rear direction on a corrugated-plate surface of the corrugated-plate shape.

6. The vehicle impact absorbing structure according to claim 3, wherein the recessed shape is continuously formed in the vehicle front-and-rear direction on a corrugated-plate surface of the corrugated-plate shape.
